# EUROPÄISCHE PATENTSCHRIFT

(11) **EP 0 360 235 B1**
(45) Veröffentlichungstag und Bekanntmachung des Hinweises auf die Patenterteilung: **02.06.1993**
(21) Anmeldenummer: 89117357.7
(22) Anmeldetag: 20.09.1989
(51) Int. Cl.: B60P 1/00

(54) **Lastfahrzeug mit einem kastenförmigen Aufbau und verschiebbarer Vorderwand**
Loads vehicle with a box-shaped superstructure and a mobile front panel
Camion à superstructure en forme de boîte comprenant une paroi avant mobile

(30) Priorität: 23.09.1988 DE 3832344; 18.11.1988 DE 3839058; 21.06.1989 DE 3920286
(43) Veröffentlichungstag der Anmeldung: 28.03.1990
(73) Patentinhaber: Wagner, Ewald, 66606 St. Wendel-Bliesen (DE)
(72) Erfinder: Wagner, Ewald, 66606 St. Wendel-Bliesen (DE)
(74) Vertreter: Bernhardt, Winfrid, Dr.-Ing.

(56) Entgegenhaltungen:
- DE-A- 1 111 521
- DE-A- 2 323 389
- GB-A- 760 130
- GB-A- 885 879
- GB-A- 1 192 092
- SE-B- 437 356
- US-A- 2 909 295
- US-A- 3 498 482

## Beschreibung

Die Erfindung geht aus von einem Lastfahrzeug, insbesondere einem Lastkraftwagen oder Sattelaufleger, mit einem kastenförmigen Aufbau, dessen Vorderwand zwischen den Seitenwänden nach hinten und wieder zurück nach vorne verschiebbar ist mittels vom hinteren Ende und vom vorderen Ende des Aufbaues zu der Vorderwand sich erstreckender Zugstränge, wobei die von der Vorderwand nach hinten sich erstreckenden Zugstränge und die nach vorne sich erstrekkenden Zugstränge derart gekoppelt sind, daß sie sich gegenläufig bewegen.

Ein solches Lastfahrzeug ist aus der US-A-2,909,295 bekannt mit zwei unten nahe den beiden Seitenwänden angreifenden Seilen und einem oben in der Mitte an der Vorderwand angreifenden Seil. Beide Enden der Seile sind an der Vorderwand befestigt, und von dieser führt das Seil zum hinteren Ende des Lastfahrzeuges, dort über eine Umlenkrolle, zurück zum vorderen Ende des Lastfahrzeuges, dort über eine Winde und wieder zur Vorderwand.
Aus der DE-A-1 111 521 ist ein Spezialfahrzeug, insbesondere für Schüttgut, bekannt, das mittels einer von vorne nach hinten und zurück bewegbaren Ausstoßplatte zu entleeren ist. Die Ausstoßplatte wird in beiden Richtungen bewegt mittels jeweils eines Flaschenzugsystems. Das Seil des nach hinten ziehenden Flaschenzugs ist am Fahrzeugrahmen befestigt, dann in Form eines sechssträngigen Flaschenzugs neben der einen Außenseite des Fahrzeugs verlegt, der an einem nach außen übergreifenden Arm der Ausstoßplatte angreift, dann nach der anderen Fahrzeugseite geführt, wo die gleichen Anordnungen getroffen sind, und schließlich zu einer Winde. Der nach vorne ziehende Flaschenzug greift auf der Mitte der Vorderwand an.

Die so gehaltene und angetriebene Vorderwand kann bis zum hinteren Ende des Aufbaues gezogen werden und damit den Inhalt vollständig ausschieben.

Der Erfindung liegt die Aufgabe zugrunde, einen Seiltrieb für die Vorderwand eines Lastfahrzeugs der eingangs genannten Art zu schaffen, mit der die Ladefläche in großer Länge ausgeführt werden kann.

Gemäß der Erfindung ist vorgesehen, daß an jeder Seitenwand zwei Zugstränge zwischen dem hinteren Ende bzw. vorderen Ende der Seitenwand, wo sie befestigt sind, und der Vorderwand über an dem hinteren Ende bzw. vorderen Ende der Seitenwand und an der Vorderwand angeordnete Umlenkrollen entlang der Seitenwand parallel hin- und hergeführt sind und nach letzter Umlenkung an dem vorderen bzw. hinteren Ende der Seitenwand gegenläufig angezogen bzw. nachgelassen sind.

Damit ergibt sich eine Flaschenzuganordnung, mit der entsprechend große Kräfte auf die und von der Vorderwand ausgeübt werden können. Die Ladefläche kann beispielsweise für leichtes Schüttgut, wie Müll, bis 14 m lang werden. Es sind jedoch auch andere Ladegüter vorgesehen.

Die Antriebsmittel für die Zugstränge finden z.B. vorne unter der Ladefläche Platz.
Als die Zugstränge kommen Drahtseile und Ketten in Betracht, die unempfindlich gegen Verschmutzung sind.

Eine Weiterbildung der Erfindung besteht darin, daß an der Unterkante der Vorderwand jeweils die beiden Enden von Tragbändern, vorzugsweise abnehmbar, befestigt sind, die gleitend auf dem Ladeboden liegen und an dessen Vorder- und Hinterkante über Umlenkrollen gelegt und im übrigen unter dem Ladeboden entlanggeführt sind.
Damit wird die Einsatzmöglichkeit des Lastfahrzeugs für Stückgut verbessert, insbesondere Ballen, Paletten u.dgl.. Die Tragbänder helfen dann nicht nur, das auf ihnen stehende Stückgut unter Verminderung oder Ersatz der sonst von der Vorderwand ausgeübten Kraft auszutragen. Sie können auch und vor allem das Beladen mit dem Stückgut erleichtern, indem sie dieses über den Ladeboden hinweg mitnehmen oder mitzunehmen helfen, so daß ggf. nur ein wenig geschoben zu werden braucht.

Nach einer anderen Weiterbildung der Erfindung ist das Lastfahrzeug mit einem in an sich bekannter Weise eine Schiebewand aufweisenden Müllfahrzeug, Rückseite an Rückseite, unmittelbar starr koppelbar.
Damit kann ein in dem Müllfahrzeug zusammengepreßtes Müllpaket in das Lastfahrzeug übergeschoben werden, und zwar in Anlage mit der gleichzeitig zurückbewegten Vorderwand des Lastfahrzeuges, so daß die Paketform erhalten bleibt. Auf diese Weise kann mehrmals ein Müllfahrzeug in den Lastwagen entleert werden, der dann eine entsprechend große Menge abtransportiert. So können die Fahrzeiten voller Müllfahrzeuge für den Abtransport vermindert und Zwischenlagerungen vermieden werden.
Zweckmäßigerweise ist dafür die Rückwand des Lastfahrzeugs nach oben ausfahrbar und ebenso die entsprechende Wand des Müllfahrzeugs.

Die Zeichnungen geben ein Ausführungsbeispiel der Erfindung wieder.
- Fig. 1: zeigt zu Erläuterungszwecken einen nicht zur Erfindung gehörigen Sattelaufleger in Seitenansicht,
- Fig. 2: zeigt eine Einzelheit des Sattelauflegers nach Fig. 1 in größerem Maßstab in Ansicht gemäß Fig. 1 von links,
- Fig. 3: zeigt einen Aufbau eines erfindungsgemäßen Sattelauflegers in perspektivischer Darstellung und

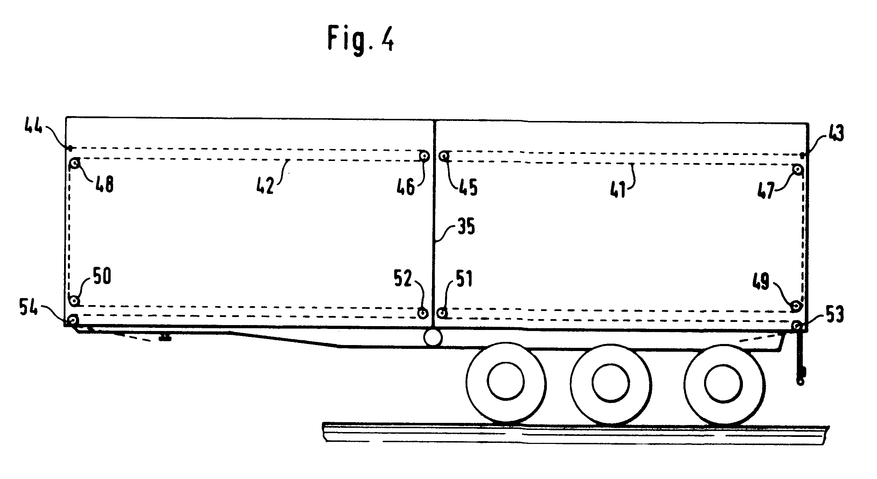

- Fig. 4: zeigt den erfindungsgemäßen Sattelaufleger nach Fig. 3 in Seitenansicht.

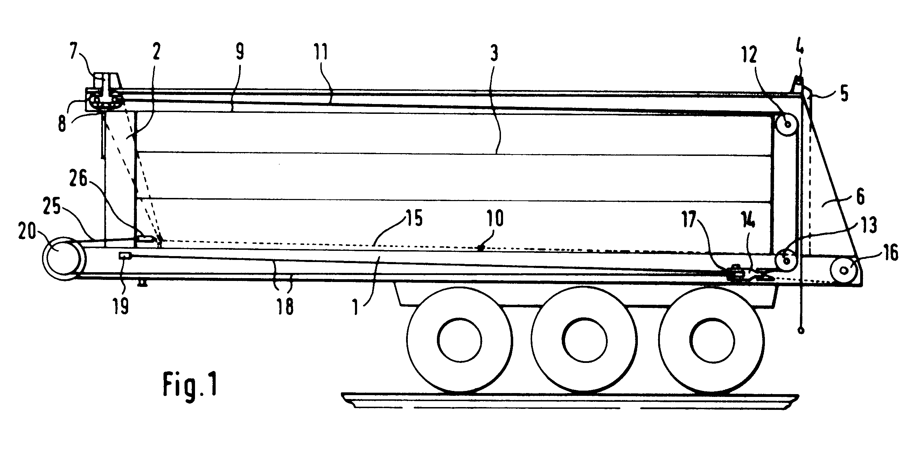

Der Sattelaufleger nach Fig. 1 weist auf einem Fahrgestell 1 einen kastenförmigen Aufbau auf, von dem eine Vorderwand 2, eine Seitenwand 3 und eine bei 4 als Klappe angelenkte Rückwand 5 zu erkennen sind. Die Seitenwände 3 stehen mit zwei abgeschrägten Flügeln 6 nach hinten über.
Die Vorderwand 2 faßt auf jeder Seite oben mit einem Ansatz 7 über den Rand der Seitenwand 3 und ist mit an dem Ansatz 7 gelagerten Rollen 8 auf einer außen an der Seitenwand 3 verlaufenden Schiene 9 abgestützt, genauer: auf dem unteren Schenkel eines mit seinem Rücken an der Seitenwand befestigten U-Profils. Mit ihrer Unterkante liegt die Vorderwand 2 einfach auf dem Ladeboden 10 auf, und zwar gegenüber den Rollen 8 zurückversetzt, so daß sie nach hinten schräg angestellt ist.

An jeder Seite führt von dem Ansatz 7 aus in dem U-Profil ein Seil 11 zu einer am hinteren Ende angeordneten Umlenkrolle 12, von dieser zu einer Umlenkrolle 13 und von dieser zurück nach vorne zu einer Rollenhalterung 14. Ferner führt auf jeder Seite, aber innen an der Seitenwand entlang, von der betreffenden unteren Ecke der Vorderwand 2 aus eine Kette 15 zu einer hinter dem Ende des Ladebodens angeordneten Umlenkrolle 16 und von dieser gleichfalls zurück nach vorne an die Rollenhalterung 14. In der Rollenhalterung 14 ist eine lose Rolle 17 für ein als Flaschenzug geführtes Seil 18 gelagert, das vorne am Fahrgestell 1 bei 19 befestigt ist, um die lose Rolle 17 läuft und, wiederum am vorderen Ende des Fahrgestells, auf eine Seiltrommel 20 führt.

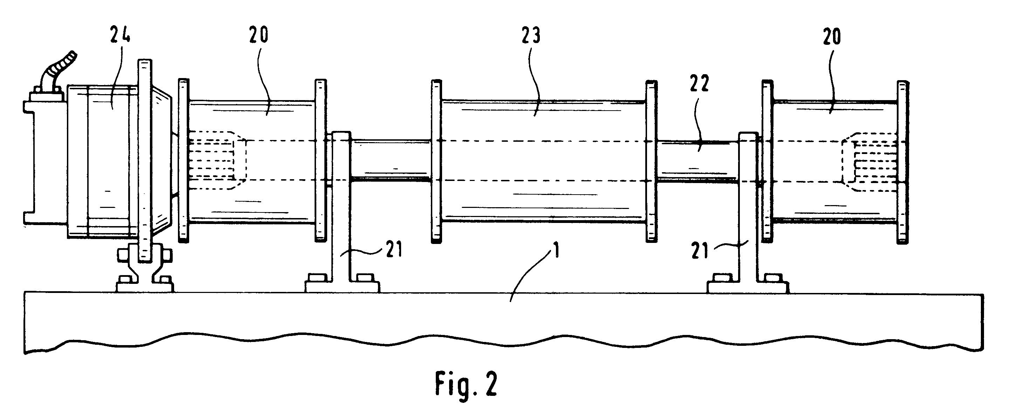

Die Seiltrommel 20 ist Teil einer in Fig. 2 dargestellten Windeneinrichtung:
Auf dem Fahrgestell 1 ist in zwei Lagerböcken 21 eine Welle 22 gelagert, auf der außen die beiden Seiltrommeln 20 und in der Mitte eine weitere Seiltrommel 23 angeordnet sind. Die Welle 22 ist vom einen Ende her durch einen Hydromotor 24 angetrieben.

Auf die Seiltrommel 23 ist mit zu den Seilen 18 und Seiltrommeln 20 umgekehrter Windungsrichtung ein Rückholseil 25 gewickelt, das um eine an der Vorderseite der Vorderwand 2 geringfügig über den Befestigungen der Kette 15 mittig angebrachte Umlenkrolle 26 gelegt und mit seinem Ende, in der Zeichnung nicht sichtbar, wiederum am Fahrgestell 1 befestigt ist.

Werden die Seile 18 auf die Seiltrommel 20 gezogen, ziehen sie über die lose Rolle 17 und deren Halterung 14 die Seile 11 und Ketten 15 an. So wird die Vorderwand 2 nach vorne gezogen und durch sie das geladene Gut bei hochgeklappter Rückwand 5 ausgeschoben. Die schräge Anstellung der Vorderwand 2 übt dabei eine Kraftkomponente in Richtung auf die offene Oberseite aus und wirkt damit Verklemmungen entgegen.
Das Rückholseil 25 wird währenddessen von der Trommel 23 in gleichem Maße freigegeben wie die Seile 18 angezogen werden. Beim Zurückholen der Vorderwand 2 mittels des Rückholseils 25 verhält es sich umgekehrt.

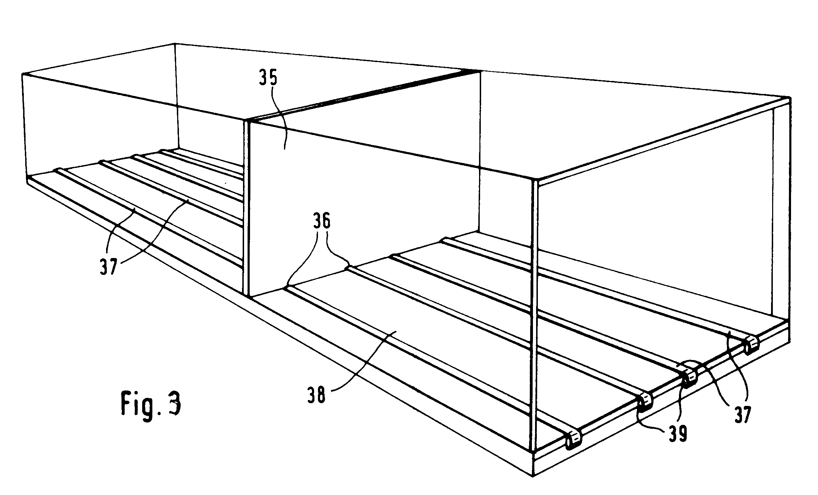

Nach Fig. 3 sind an einer, halb zurückgezogen gezeichneten, Vorderwand 35 bei 36 Tragbänder 37 befestigt, die über den Ladeboden 38 gelegt, an dessen hinterem Ende über Umlenkrollen 39 unter den Ladeboden 38 gelenkt, unter diesem zurückgeführt, am vorderen Ende wieder auf ihn umgelenkt und schließlich wieder an der Vorderwand 35 befestigt sind.
In diesem Falle ist die Vorderwand 35 senkrecht ausgerichtet und abgesehen von ihrem Aufstehen auf dem Ladeboden allein gehalten durch zwei von einer nicht gezeichneten Winde gegenläufig angezogene bzw. abgelassene Seile 41 und 42 an jeder Seitenwand. Beide Seile 41 und 42 führen von einer Befestigung 43 bzw. 44 am hinteren bzw. vorderen Ende der Seitenwand zu einer Umlenkrolle 45 bzw. 46 an der Vorderwand, parallel zurück zu einer Umlenkrolle 47 bzw. 48 am hinteren bzw. vorderen Ende der Seitenwand, nach unten zu einer Umlenkrolle 49 bzw. 50, von dieser wiederum zu einer Umlenkrolle 51 bzw. 52 an der Vorderwand, parallel zurück zu einer Umlenkrolle 53 bzw. 54 am hinteren bzw. vorderen Ende der Seitenwand und von da zu der erwähnten Winde. Die jeweils parallel nebeneinander sich erstreckenden Trume können in Nuten auf der Innenseite der Seitenwände liegen einschließlich der Umlenkrollen 46,46,51 und 52, die damit die Vorderwand 35 auch gegen Kippen sichern.
Hier helfen die beim Verschieben der Vorderwand 35 auf dem Ladeboden gleitenden Tragbänder 37, auf ihnen liegende Kisten, Paletten, Ballen o.dgl. auszutragen wie auch, umgekehrt, beim Ladevorgang über den Ladeboden zu ziehen.

## Patentansprüche

1. Lastfahrzeug, insbesondere Lastkraftwagen oder Sattelaufleger, mit einem kastenförmigen Aufbau, dessen Vorderwand (35) zwischen den Seitenwänden nach hinten und wieder zurück nach vorne verschiebbar ist mittels vom hinteren Ende und vom vorderen Ende des Aufbaues zu der Vorderwand (35) sich erstreckender Zugstränge (41), wobei die von der Vorderwand (35) nach hinten sich erstreckenden Zugstränge (41) und die nach vorne sich erstreckenden Zugstränge (42) derart gekoppelt sind, daß sie sich gegenläufig bewegen,
dadurch gekennzeichnet,
daß an jeder Seitenwand zwei Zugstränge (41;42) zwischen dem hinteren Ende bzw. vorderen Ende der Seitenwand, wo sie befestigt (43 bzw. 44) sind, und der Vorderwand (35) über an dem hinteren Ende bzw. vorderen Ende der Seitenwand und an der Vorderwand (35) angeordnete Umlenkrollen (45;47;49;51) bzw. 46;48;50;52) entlang der Seitenwand parallel hin- und hergeführt sind und nach letzter Umlenkung (53 bzw. 54) an dem vorderen bzw. hinteren Ende der Seitenwand gegenläufig angezogen bzw. nachgelassen werden.

2. Lastfahrzeug nach Anspruch 1,
dadurch gekennzeichnet,
daß an der Unterkante der Vorderwand (35) jeweils die beiden Enden von Tragbändern (37), vorzugsweise abnehmbar, befestigt sind, die gleitend auf dem Ladeboden (38) liegen und an dessen Vorder- und Hinterkante über Umlenkrollen (39) gelegt und im übrigen unter dem Ladeboden (38) entlanggeführt sind.

3. Lastfahrzeug nach Anspruch 1 oder 2,
dadurch gekennzeichnet,
daß es mit einem in an sich bekannter Weise eine Schiebewand aufweisenden Müllfahrzeug, Rückseite an Rückseite, unmittelbar starr koppelbar ist.

4. Lastfahrzeug nach einem der Ansprüche 1 bis 3,
dadurch gekennzeichnet,
daß die Rückwand des Lastfahrzeugs nach oben ausfahrbar ist.

## Claims

1. A load-carrying vehicle, in particular a motor lorry or semi-trailer, having a box-shaped superstructure, the front wall (35) of which can be moved rearwardly and again forwardly between the side walls by means of draw ropes (41) extending from the rear end and from the front end of the superstructure to the front wail (35), whereby the draw ropes (41) extending from the front wall (35) to the rear and the draw ropes (42) extending forwardly are so coupled that they move in opposite directions,
**characterised in that** at each side wail two draw ropes (41; 42) are guided parallel back and forth along the side wall between the rear end and the front end of the side wall respectively, where they are attached (43 and 44 respectively), and the front wall (35) via deflection pulleys (45; 47; 49; 51) and (46; 48; 50; 52) respectively, which are disposed at the rear end and front end respectively of the side wall and at the front wall (35), and after the last deflection pulleys (53 and 54 respectively) at the front or rear end respectively of the side wall are tightened and respectively slackened in opposite directions.

2. A load-carrying vehicle according to Claim 1,
**characterised in that** the two ends of carrying straps (37), which slide along the loading floor (38) and at its front and rear edge are laid over deflection pulleys (39) and are also conveyed beneath the loading floor (38), are attached, preferably in a detachable manner, to the lower edge of the front wall (35).

3. A load-carrying vehicle according to Claim 1 or 2,
**characterised in that** it can be rigidly coupled, back to back, directly to a refuse vehicle having a sliding wall in a manner known per se.

4. A load-carrying vehicle according to one of Claims 1 to 3,
**characterised in that** the rear wall of the load-carrying vehicle can be extended upwardly.

## Revendications

1. Poids lourd, en particulier camion ou semi-remorque, présentant une superstructure en forme de boîte dont la paroi avant (35) peut être déplacée vers l'arrière et à nouveau vers l'avant entre les parois latérales au moyen de câbles d'actionnement (41) s'étendant de l'extrémité arrière et de l'extrémité avant de la superstructure vers la paroi avant (35), les câbles d'actionnement (41) s'étendant de la paroi avant (35) vers l'arrière et les câbles d'actionnement (42) s'étendant vers l'avant étant couplés de telle manière qu'ils ont un mouvement contraire, caractérisé en ce que, à chaque paroi latérale, deux câbles d'actionnement (41,42) sont conduits et amenés parallèlement le long de la paroi latérale entre l'extrémité arrière ou avant de la paroi latérale, à laquelle ils sont fixés, et la paroi avant (35) via des poulies de déviation (45;47;49;51) ou (46;48;50;52) disposées sur l'extrémité arrière ou avant de la paroi latérale et sur la paroi avant (35) et en ce qu'ils sont tirés ou relâchés dans un mouvement opposé après la dernière déviation (53 ou 54) à l'extrémité avant ou arrière de la paroi latérale.

2. Poids lourd selon la revendication 1, caractérisé en ce que les deux extrémités de sangles (37) sont fixées au-dessous de la paroi avant (35), de préférence de manière amovible, lesdites sangles étant placées de manière coulissante sur le fond de chargement (38) et avec leur côté avant et arrière sur des poulies de déviation (39), le reste des sangles s'étendant au-dessous du fond de chargement.

3. Poids lourd selon la revendication 1 ou 2, caractérisé en ce qu'on peut le coupler directement et de manière rigide, dos à dos, à un véhicule à ordures présentant de manière connue en soi une paroi coulissante.

4. Poids lourd selon l'une quelconque des revendications 1 à 3, caractérisé en ce que la paroi arrière du poids lourd peut être retirée vers le haut.
